# FASCICULE DE BREVET EUROPEEN

(11) **EP 1 908 951 B1**
(45) Date de publication et mention de la délivrance du brevet: **24.02.2010**
(21) Numéro de dépôt: 07116880.1
(22) Date de dépôt: 20.09.2007
(51) Int. Cl.: F02M 25/07

(54) **Dispositif de recirculation des gaz d'échappement d'un moteur à combustion interne et moteur à combustion interne équipé d'un tel dispositif**
Vorrichtung zur Rückführung von Abgasen eines Verbrennungsmotors und mit einer solchen Vorrichtung ausgestatteter Verbrennungsmotor
Device for recirculating exhaust gas from an internal combustion engine and internal combustion engine equipped with such a device

(30) Priorité: 29.09.2006 FR 0654030
(43) Date de publication de la demande: 09.04.2008
(73) Titulaire: PEUGEOT CITROËN AUTOMOBILES S.A., 78140 Velizy Villacoublay (FR)
(72) Inventeur: Hoffmann, Nicolas, 78180 Montigny le Bretonneux (FR); Portalier, Jacques, 92100 Boulogne-Billancourt (FR)
(74) Mandataire: Allain, Laurent

(56) Documents cités:
- EP-A- 1 010 889
- EP-A1- 1 154 144
- EP-A2- 1 063 411
- DE-U1-202005 000 655
- US-A- 4 367 719
- US-A1- 2002 043 254

## Description

La présente invention concerne un dispositif de recirculation des gaz d'échappement d'un moteur à combustion interne, notamment pour véhicule automobile.

Elle vise également un moteur à combustion interne suralimenté à injection directe d'essence et à allumage commandé, et qui est équipé d'un dispositif de recirculation externe des gaz d'échappement. Un tel moteur peut en outre être équipé d'un dispositif de distribution variable pouvant permettre une recirculation interne de gaz brûlés.

On sait que la recirculation externe de gaz d'échappement refroidis pour un moteur à essence permet :
- une réduction des pertes par pompage, aux faibles régimes et charges du moteur, du fait de la réduction des pertes de charge à l'admission de la vanne papillon traditionnelle ;
- une réduction des pertes thermiques du moteur aux charges intermédiaires,
- une amélioration des rendements du cycle de fonctionnement du moteur aux faibles régimes et fortes charges, du fait du décalage de l'avance à l'allumage vers l'avance optimale,
- une réduction d'émission d'oxyde d'azote (Nox) à la source du fait de températures de combustion plus faibles, et
- une diminution de la richesse du mélange air-essence à pleine charge du fait de la diminution de température d'échappement induite par cette recirculation externe des gaz d'échappement.

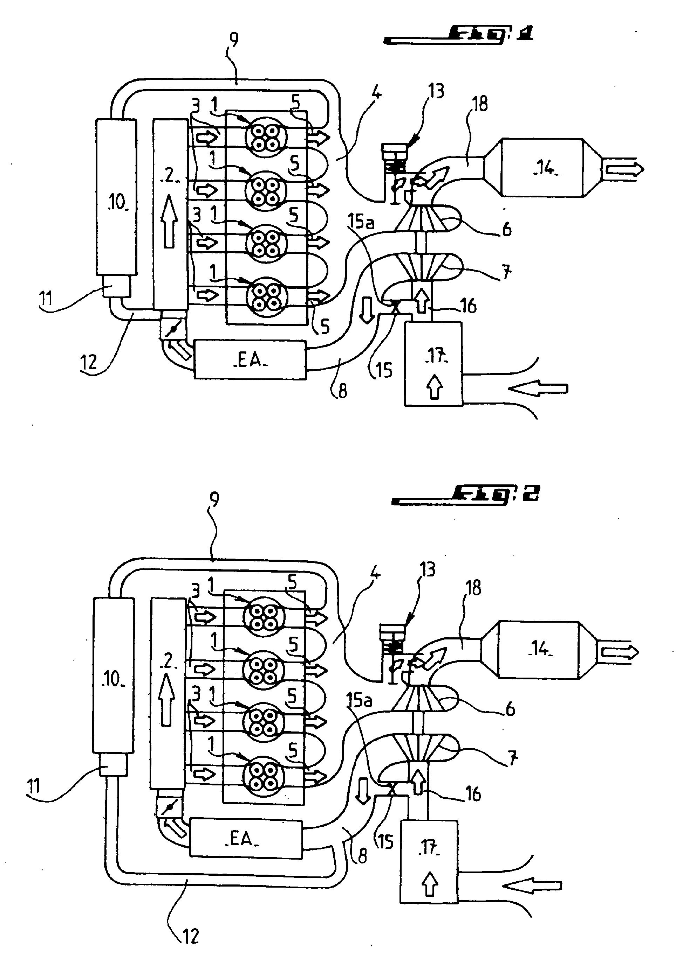

La figure 1 représente un moteur à combustion interne suralimenté équipé d'un dispositif de recirculation externe des gaz d'échappement et tel que décrit, par exemple, dans le document EP 1 010 889.

Ce moteur comprend plusieurs cylindres 1, par exemple au nombre de quatre, alimentés en air de combustion à partir d'un collecteur ou répartiteur d'admission d'air 2 relié aux chambres de combustion des cylindres 1 par l'intermédiaire de tubulures d'admission 3.

Les gaz d'échappement sortant des chambres de combustion pénètrent dans un collecteur d'échappement 4 au travers de tubulures d'échappement 5.

Une partie des gaz d'échappement est dirigée vers une turbine 6 d'un turbocompresseur pour permettre au compresseur 7 de fournir dans une conduite 8 de l'air suralimenté de façon à augmenter le débit d'air dans le collecteur d'admission 2. Un échangeur ou refroidisseur air-air EA est disposé entre la conduite 8 et l'entrée du collecteur d'admission 2 pour refroidir l'air suralimenté.

Une autre partie des gaz d'échappement présents dans le collecteur d'échappement 4 est recirculée dans la conduite d'admission 2 au travers d'un conduit 9, d'un échangeur 10 permettant le refroidissement des gaz d'échappement, d'une vanne de recirculation 11 commandée en fonction de variables du moteur, tels que par exemple la vitesse et la charge du moteur, pour réguler le débit de gaz circulant dans le conduit 9 et l'échangeur 10, et d'un conduit 12 relié en amont du collecteur d'admission 2 et en aval de l'échangeur EA de manière à mélanger dans le collecteur d'admission 2 l'air suralimenté sortant de l'échangeur EA et les gaz d'échappement refroidis à débit régulé par la vanne 11.

Un ensemble formant clapet ou soupape de décharge 13 est prévu en amont de la turbine 6 du turbocompresseur pour dériver, lorsqu'occupant une position d'ouverture, tout ou partie des gaz d'échappement de la turbine 6 pour réduire de la sorte la vitesse de la turbine et, par conséquent, la pression de suralimentation d'air du compresseur 7.

Les gaz d'échappement sortant de la turbine ou dérivés par l'ensemble à clapet ou soupape de décharge ouvert 13 sont acheminés vers un catalyseur 14 d'une ligne d'échappement pour réduire la quantité des polluants, tel que les oxydes d'azote (NOx) et les oxydes de carbone.

Une vanne 15a est disposée dans une conduite de dérivation 15 entre la conduite sortie 16 d'un filtre à air 17 et la conduite 8 et permet de dériver tout ou partie de l'air sortant du filtre 17 dans la conduite 8.

Les figures 2 à 4 représentent des variantes de réalisation du moteur à combustion interne de la figure 1.

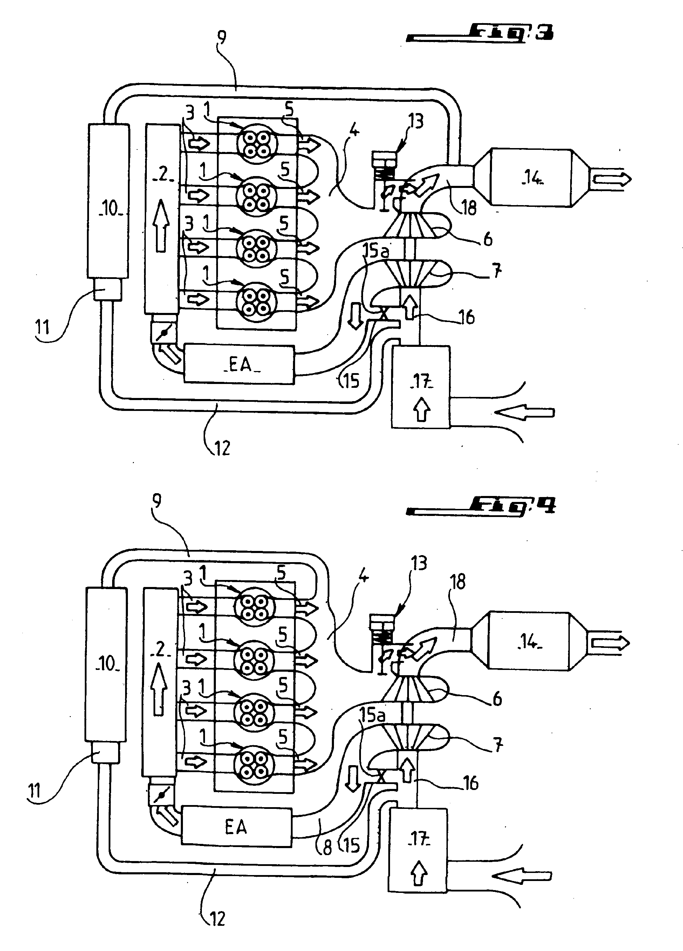

Selon la figure 2, la conduite 12 reliée en sortie de la vanne de recirculation 11 est raccordée à son extrémité opposée dans la conduite 8 en amont de l'échangeur EA. Selon la variante de la figure 3, l'extrémité de la conduite 12 opposée à celle raccordée à la vanne de recirculation 11 est raccordée à la conduite de sortie 16 du filtre à air 17 en amont de la conduite de dérivation 15 et la conduite de dérivation 9 est raccordée, à l'opposé de l'échangeur 10, à la conduite 18 reliant la sortie de la turbine 6 au catalyseur 14. Selon la configuration de la figure 4, la conduite 12 est reliée entre la vanne de recirculation 11 et la conduite de sortie 16 du filtre à air 17 comme en figure 3.

Ces différentes architectures connues de moteur, notamment celles des figures 1 et 4, imposent la présence d'un circuit d'eau séparé à basse température de celui du moteur pour refroidir les gaz d'échappement recirculés avant réadmission vers le circuit d'air frais.
Le document EP 1 063 411 A2 décrit un conduit de recirculation traversant la culasse du moteur.
Les architectures connues nécessitent également un radiateur supplémentaire de sorte qu'elles sont difficilement intégrables dans le compartiment moteur et sous le capot du véhicule. En outre, les architectures des moteurs des figures 2, 3 et 4 imposent un temps de réponse très important du fait des volumes important de gaz de recirculation d'échappement à vidanger, dans le cas d'une forte demande d'air d'admission.

La présente invention a pour but de palier les inconvénients ci-dessus des dispositifs connus de recirculation externes des gaz d'échappement d'un moteur à combustion interne.

A cet effet, l'invention propose un dispositif de recirculation externe des gaz d'échappement d'un moteur à combustion interne du type suralimenté, notamment pour véhicule automobile, comprenant un conduit de recirculation reliant un point du collecteur d'échappement à la chambre de combustion d'au moins un cylindre du moteur par l'intermédiaire du collecteur d'admission du moteur, et une vanne commandée de recirculation permettant de réguler le débit de gaz circulant dans le conduit de recirculation, et qui est caractérisé en ce que le conduit de recirculation traverse la culasse du moteur en étant entouré par le circuit de circulation d'eau de refroidissement de la culasse de manière à refroidir les gaz d'échappement circulant dans le conduit de recirculation. De plus, un refroidisseur d'air suralimenté est intégré dans le collecteur d'admission et la sortie du conduit de recirculation est raccordée à l'entrée du refroidisseur d'air suralimenté par l'intermédiaire de la vanne commandée de recirculation.

De préférence, le refroidisseur d'air suralimenté est du type air-eau.

Selon une variante de réalisation, le circuit d'eau de refroidissement du refroidisseur est celui du moteur.

Selon une autre variante de réalisation, le circuit d'eau de refroidissement du refroidisseur est séparé de celui du moteur.

L'invention propose également un moteur à combustion interne suralimenté, notamment pour véhicule automobile, et qui est caractérisé en ce qu'il comprend un dispositif de recirculation des gaz d'échappement tel que défini précédemment.

Le moteur à combustion interne est du type à injection directe d'essence et à allumage commandé.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- les figures 1 à 4 représentent en vue de dessus des dispositifs connus de recirculation externe de gaz d'échappement d'un moteur à combustion interne ; et
- la figure 5 représente en vue de dessus un dispositif conforme à l'invention de recirculation externe des gaz d'échappement d'un moteur à combustion interne.

L'invention va être décrite en application à un moteur à combustion interne suralimenté à injection directe d'essence et allumage commandé, mais il est bien entendu qu'elle peut s'appliquer à tout autre type de moteur à combustion interne.

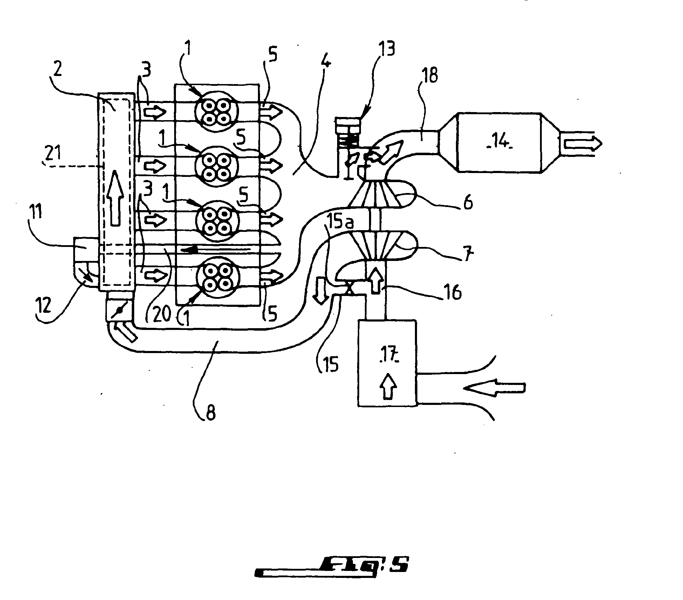

Les éléments et/ou composants du moteur à combustion interne de la figure 5 identiques et/ou accomplissant les mêmes fonctions que ceux des moteurs à combustion interne des figures 1 à 4 portent les mêmes références et ne seront pas à nouveau détaillés.

Selon l'invention, le dispositif de recirculation externe des gaz d'échappement du moteur comprend un conduit de recirculation 20 traversant la culasse du moteur en étant entouré par le circuit de circulation d'eau de refroidissement de cette culasse, le conduit 20 débouchant à l'une de ses extrémités dans le collecteur d'échappement 4 et ayant son extrémité opposée reliée à la vanne commandée de recirculation 11 qui communique avec l'entrée du collecteur d'admission 2 par l'intermédiaire de la conduite 12.

Ainsi, les gaz d'échappement recirculant dans le conduit de recirculation 20 sont refroidis par le circuit de circulation d'eau de refroidissement de la culasse.

Par conséquent, les gaz d'échappement recirculés sont refroidis une première fois.

Ensuite, les gaz d'échappement recirculés sont injectés dans un refroidisseur ou radiateur 21 d'air suralimenté provenant de la conduite 8 et qui est intégré dans le collecteur ou répartiteur 2. De préférence, le refroidisseur d'air suralimenté 21 est du type air-eau, c'est-à-dire que les gaz d'échappement provenant de la conduite 12 et l'air suralimenté provenant de la conduite 8 traversent le refroidisseur 21 et sont refroidis par un circuit d'eau, qui peut être celui permettant de refroidir le moteur ou qui est séparé du circuit d'eau de refroidissement de ce moteur. Bien entendu, il est possible d'utiliser un autre fluide de refroidissement du mélange gaz d'échappement et air suralimenté circulant dans le refroidisseur 21. Le volume du refroidisseur air-eau 21 est sensiblement plus faible que le volume d'un refroidisseur air-air, ce qui permet de conserver un temps de réponse acceptable. De plus, le refroidisseur air-eau présente une efficacité telle qu'il permet d'atteindre des niveaux de température proches de ceux d'une configuration sans recirculation des gaz d'échappement.

La conduite de recirculation 20 peut être réalisée par un canal percé dans la culasse ou venant de fonderie avec celle-ci. La forme de cette conduite 20 est relativement libre, en fonction des contraintes de réalisation de la culasse du moteur. Cette conduite n'a pas forcément une section constante, mais il faut éviter des restrictions de sections de celle-ci ainsi que des changements brusques de direction pour limiter les pertes de charge.

L'intégration de la conduite de recirculation 20 dans la culasse du moteur permet ainsi le refroidissement des gaz d'échappement sans module ou d'échangeur supplémentaire et sans augmentation notable des coûts de réalisation.

En outre, l'intégration du refroidisseur d'air suralimenté dans le collecteur ou répartiteur d'admission 2 réduit considérablement l'encombrement et permet ainsi d'intégrer facilement le dispositif de recirculation des gaz d'échappement sous le capot du moteur du véhicule.

L'invention résout ainsi les problèmes de contrôle et de refroidissement d'une architecture de recirculation des gaz d'échappement telle qu'elle est connue actuellement et reste compatible avec une architecture du véhicule.

## Revendications

1. Dispositif de recirculation externe des gaz d'échappement d'un moteur à combustion interne du type suralimenté, notamment pour véhicule automobile, comprenant un conduit de recirculation (20) reliant un point du collecteur d'échappement (4) à la chambre de combustion d'au moins un cylindre (1) du moteur par l'intermédiaire du collecteur d'admission (2) du moteur, et une vanne commandée de recirculation (11) permettant de réguler le débit de gaz circulant dans le conduit de recirculation (20), **caractérisé en ce que** le conduit de recirculation (20) traverse la culasse du moteur en étant entouré par le circuit de circulation d'eau de refroidissement de la culasse de manière à refroidir les gaz d'échappement circulant dans le conduit de recirculation (20), et **en ce qu'** un refroidisseur d'air suralimenté (21) est intégré dans le collecteur d'admission (2) et la sortie du conduit de recirculation (20) est raccordée à l'entrée du refroidisseur d'air suralimenté (21) par l'intermédiaire de la vanne commandée de recirculation (11).

2. Dispositif selon la revendication 1, **caractérisé en ce que** le refroidisseur d'air suralimenté (21) est du type air-eau.

3. Dispositif selon la revendication 2, **caractérisé en ce que** le circuit d'eau de refroidissement du refroidisseur (21) est celui du moteur.

4. Dispositif selon la revendication 2, **caractérisé en ce que** le circuit d'eau de refroidissement du refroidisseur (21) est séparé de celui du moteur.

5. Moteur à combustion interne suralimenté, notamment pour véhicule automobile, **caractérisé en ce qu'**il comprend un dispositif de recirculation des gaz d'échappement tel que défini dans l'une quelconque des revendications 1 à 4.

6. Moteur selon la revendication 5, **caractérisé en ce qu'**il est du type à injection directe d'essence et à allumage commandé.

## Claims

1. Device for the external recirculation of the exhaust gases from an internal combustion engine of the supercharged type, in particular for an automobile, comprising a recirculation duct (20) connecting a point of the exhaust manifold (4) to the combustion chamber of at least one cylinder (1) of the engine by means of the inlet manifold (2) of the engine, and a controlled recirculation valve (11) allowing the flow to be regulated of gas circulating in the recirculation duct (20), **characterized in that** the recirculation duct (20) passes through the cylinder head of the engine, being surrounded by the circuit for circulation of cooling water from the cylinder head so as to cool the exhaust gases circulating in the recirculation duct (20), and **in that** a supercharged air cooler (21) is integrated in the inlet manifold (2) and the outlet of the recirculation duct (20) is connected to the inlet of the supercharged air cooler (21) by means of the controlled recirculation valve (11).

2. Device according to Claim 1, **characterized in that** the supercharged air cooler (21) is of the air/water type.

3. Device according to Claim 2, **characterized in that** the circuit of cooling water of the cooler (21) is that of the engine.

4. Device according to Claim 2, **characterized in that** the circuit of cooling water of the cooler (21) is separate from that of the engine.

5. Supercharged internal combustion engine, in particular for an automobile, **characterized in that** it comprises a device for recirculating exhaust gases as defined in any of Claims 1 to 4.

6. Engine according to Claim 5, **characterized in that** it is of the direct fuel injection type and with spark ignition.

## Patentansprüche

1. Vorrichtung zur externen Rückführung der Abgase eines Verbrennungsmotors des aufgeladenen Typs, insbesondere für Kraftfahrzeug, die eine Rückführungsleitung (20) aufweist, die einen Punkt des Abgassammlers (4) mit der Brennkammer mindestens eines Zylinders (1) des Motors über den Einlasssammler (2) des Motors verbindet, und ein gesteuertes Rückführungsventil (11), das es erlaubt, den Durchfluss der Gase, die in der Rückführungsleitung (20) zirkulieren, zu regulieren, **dadurch gekennzeichnet, dass** die Rückführungsleitung (20) den Zylinderkopf des Motors durchquert und dabei von dem Kühlwasserzirkulationskreislauf des Zylinderkopfes derart umgeben ist, dass die Abgase, die in der Rückführungsleitung (20) zirkulieren, gekühlt werden und dass ein Ladeluftkühler (21) in den Einlasssammler (2) integriert ist, und dass der Ausgang der Rückführungsleitung (20) mit dem Eingang des Ladeluftkühlers (21) über das gesteuerte Rückführungsventil (11) angeschlossen ist.

2. Vorrichtung nach Anspruch 1, **dadurch gekennzeichnet, dass** der Ladeluftkühler (21) des Typs Luft-Wasser ist.

3. Vorrichtung nach Anspruch 2, **dadurch gekennzeichnet, dass** der Kühlwasserkreislauf des Kühlers (21) der des Motors ist.

4. Vorrichtung nach Anspruch 2, **dadurch gekennzeichnet, dass** der Kühlwasserkreislauf des Kühlers (21) von dem des Motors getrennt ist.

5. Auflademotor insbesondere für Kraftfahrzeug, **dadurch gekennzeichnet, dass** er eine Rückführungsvorrichtung der Abgase wie in einem der Ansprüche 1 bis 4 definiert aufweist.

6. Motor nach Anspruch 5, **dadurch gekennzeichnet, dass** er des Typs mit Benzindirekteinspritzung und gesteuertem Zünden ist.
